# EUROPÄISCHE PATENTSCHRIFT

(11) **EP 2 206 599 B1**
(45) Veröffentlichungstag und Bekanntmachung des Hinweises auf die Patenterteilung: **19.01.2011**
(21) Anmeldenummer: 09015543.3
(22) Anmeldetag: 16.12.2009
(51) Int. Cl.: B29C 70/44, B29C 70/48

(54) **Vakuumunterstütztes Prepreg-Infusions-Hybridverfahren mit Schnellaushärtung**
Vacuum-supported prepreg infusion hybrid method with quick hardening
Procédé hybride de perfusion de pré-imprégné assisté sous vide à durcissement rapide

(30) Priorität: 08.01.2009 DE 102009004394
(43) Veröffentlichungstag der Anmeldung: 14.07.2010
(73) Patentinhaber: EUROCOPTER DEUTSCHLAND GmbH, 86609 Donauwörth (DE)
(72) Erfinder: Wellhausen, Christian, 85521 Ottobrunn (DE)
(74) Vertreter: GPI & Associés

(56) Entgegenhaltungen:
- EP-A2- 0 415 869
- DE-A1-102005 008 252
- JP-A- 2008 179 149
- US-A- 6 036 900

## Beschreibung

Die Erfindung betriff ein Verfahren gemäß dem Anspruch 1.

In vielen Industriezweigen finden Faserverbundstoffe Anwendung. Vor allem in der Luftfahrtindustrie sind diese aufgrund ihres sehr guten Verhältnisses von Festigkeit zu Gewicht weit verbreitet. Es sind unterschiedliche Verfahrensweisen zur Herstellung dieser Faserverbundstoffe bekannt. Für dünne, großflächige Strukturen werden dabei vorrangig so genannte Prepreg- Verfahren eingesetzt, wohingegen für Verstärkungsstrukturen der Bereich der Infusions- / Injektions- Verfahren verstärkt Anwendung findet. Beide Verfahren haben spezifische Vor- und Nachteile, welche insbesondere auf die Eigenschaften des verwendeten Matrixwerkstoffs zurückzuführen sind. Prepreg-Verfahren weisen bedingt durch die mögliche Beimischung von additiven Bestandteilen sehr gute mechanische Eigenschaften auf, wohingegen Infusionsverfahren insbesondere Kostenvorteile bieten. Besonders erstrebenswert ist daher eine Kombination beider Verfahren zur Nutzung der jeweils spezifischen Eigenschafts- und Kostenvorteile.

Bekannt ist grundsätzlich aus der DE 10 2005 008 252 ein Verfahren zur Herstellung eines Faserverbund-Bauelements angeben, das weiter als Prepreg-Infusions-Hybrid-Verfahren bezeichnet wird.

Dabei wird ein vorimprägniertes Prepreg-Material mit einer Faserstruktur verbunden, indem die beiden aneinanderliegenden Strukturen derart aufgeheizt werden, dass sich das Matrixmaterial, das sich im Prepreg-Material befindet, verflüssigt und unregelmäßig in die trockene Faserstruktur eindringt. Daraufhin wird weiteres Matrixmaterial (infusionsgeeignet) von außen in die Faserstruktur eingeleitet, was eine "Verzahnung" der beiden Strukturen an der Grenzfläche zur Folge hat. Anschließend wird das Material über eine Temperaturerhöhung ausgehärtet. Durch die Verzahnung der beiden Matrixsysteme soll eine hohe Scherfestigkeit gewährleistet werden.

Weiterhin ist in der DE 101 56 123 B4 ein vakuumgestütztes Verfahren zur Herstellung von faserverstärkten Kunststoffmaterialien aus vorimprägniertem Prepreg-Halbzeug, Textilhalbzeug und einem weiteren Infusions-Matrixmaterial angegeben. Durch dieses Fertigungsverfahren lassen sich in einem Prozessschritt Schalenstrukturen aus Prepreg- Material und integrierte Versteifungsstrukturen mit dem Liquid-Composite-Moulding (LCM) Verfahren in einem Prozessschritt herstellen.

Nachteilig an diesem Verfahren ist, dass zur Erreichung einer entsprechenden Qualität das Material mit Überdruck beaufschlagt werden muss. Daher muss die Fertigung in einem mit Überdruck beaufschlagbaren Raum erfolgen. Dies sind üblicherweise Autoklaven.

Die Schrift DE 101 56 123, beschreibt ein Verfahren zur Herstellung von faserverstärkten Kunststoffmaterialen aus vorimprägniertem Prepreg-Halbzeug, Textilhalbzeug und einem weiteren Infusions-Matrixmaterial. Außerdem muss in den beschriebenen Verfahren zur Erreichung einer entsprechenden Qualität das Material mit Überdruck beaufschlagt werden, zum Beispiel Mittels eines Autoklaven. Das Aufbringen von Überdruck ist allgemein charakteristisch für die Verarbeitung von Prepregmaterialien.

Aus der Schrift US 6 036 900, ist ein Verfahren bekannt, bei dem die Aufheizrate so hoch wie möglich eingestellt werden soll, aber dass es zu keinem Aufschäumen des Harzes kommt. Es werden Aufheizraten bis zu 5°C/Minute genannt. In den beschriebenen Beispielen sind Aufheizraten genannt, die 5"/Minute nicht überschreiten. Hierbei ist zu beachten, dass sich diese Schrift speziell auf die Verarbeitung von Polyimide-Harzsysteme bezieht.

Möchte man die Nutzung des Autoklavens umgehen, also ein lediglich vakuumunterstütztes Verfahren anwenden, so ist dies derzeit im Bereich der Luftfahrt, aufgrund der zu niedrigen Materialgüte für großflächige komplexe Strukturen ungeeignet. Dies liegt daran, dass sich das vorimprägnierte Halbzeug (Prepreg) in der Regel nur durch eine Beaufschlagung mit Überdruck porenfrei aushärten lässt. Werden großflächige Bauteile nach den oben genannten Verfahren, aber ohne Überdruckbeaufschlagung gefertigt, hat dies eine unerwünscht hohe Porosität zur Folge.

Aus der Schrift EP 0 415 869, ist ein vakuumunterstütztes Prepreg-Infusions-Hybrid-Verfahren mit folgenden Schritte bekannt:
- Aneinanderdrücken mindestens eines ersten Bauteilbereichs aus vorimprägniertem Prepreg-Material an mindestens einem zweiten Bauteilbereich aus trockener Faserstruktur zu einem gesamten Bauteil, wobei das Prepreg-Material des ersten Bauteilbereichs ein erstes Matrixmaterial umfasst,
- Vakuumieren des gesamten Bauteils,
- Infiltrieren des infusionstauglichen zweiten Matrixmaterials in den zweiten Bauteilbereich,
- Aufheizen des gesamten Bauteils auf Aushärtetemperatur, und
- Halten der Aushärtetemperatur für eine frei einstellbare Aushärtedauer.

Daher liegt der Erfindung die Aufgabe zugrunde ein Verfahren anzugeben, das die Vorteile der vorgenannten Verfahren birgt, dabei aber auch eine hohe Materialgüte, die den Einsatz im Luftfahrtbereich erlaubt, aufweist und darüber hinaus weniger Prozesszeit in Anspruch nimmt.

Der Erfindung liegt die Erkenntnis zu Grunde, dass bei einer hohen Aufheizrate die Viskosität eines Matrixmaterials reduziert wird, was die Konsolidierung des Matrixmaterials verbessert und den Porengehalt eines Faserverbundlaminats senkt.

Diese Aufgabe wird erfindungsgemäß durch die Merkmale des Anspruchs 1 gelöst.

Erfindungsgemäß werden mindestens ein erster Bauteilbereich aus vorimprägniertem Prepreg-Material und mindestens ein zweiter Bauteilbereich aus trockener, gegebenenfalls vorgeformter Faserstruktur unter Vakuum in einer Kavität zu einem gesamten Bauteil aneinandergepresst. Weiterhin wird die Temperatur erfindungsgemäß mit einer Aufheizrate von mindestens 5 K/min erhöht. Dadurch wird das im vorimprägnierten Prepreg-Material enthaltene erste Matrixmaterial verflüssigt und dringt in den Grenzbereich des zweiten Bauteilbereichs (trockene Faserstruktur) ein. Darüber hinaus wird während einer Zwischenhaltestufe, bei der die Temperatur des gesamten Bauteils inklusive Werkzeug konstant gehalten wird, ein zweites Matrixmaterial in den zweiten Bauteilbereich injiziert oder infiltriert, wobei sich das zweite Matrixmaterial mit dem des ersten Bauteilbereichs im Grenzbereich vermischt. Durch eine weitere Temperaturerhöhung mit mindestens 5 K/min bis auf die Aushärtetemperatur des Materialverbundes wird das Matrixmaterial bei erreichter Aushärtetemperatur über einen materialabhängigen Zeitraum ausgehärtet.

Herkömmlicher Weise werden Temperaturanstiege von etwa 1.5 K/min realisiert. Durch die höhere Aufheizrate von mindestens 5 K/min, vorzugsweise 10 K/min, wird die Viskosität des Matrixmaterials im vorimprägnierten Faserhalbzeug (Prepreg) reduziert. Dadurch kann dies besser in die trockene Faserstruktur eindringen und sorgt so für eine geringere Porosität, und somit für eine höhere Qualität des erzeugten Faserverbund-Bauteils.

Durch die Anwendung der Schnellhärtung bei Verwendung des vakuumgestützten Prepreg-Infusions-Verfahrens ergibt sich neben einer verkürzten Aushärtezeit ebenfalls ein geringerer Porositätsgrad des erzeugten Materialverbundes.

Weiterhin vorteilhaft ist, dass das Verfahren bedingt durch die schnelle Aufheizung und die damit verbundene niedrige Matrixviskosität mit einer Druckdifferenz zwischen Umgebung und Bauteil von weniger als 1 bar ausgeführt werden kann.

Somit kann die Fertigung eines Faserverbund-Bauteils lediglich durch die Verwendung von Unterdruck durchgeführt werden. Durch das bessere Durchdringungsverhalten von Matrixmaterial bei niedrigerer Viskosität kann daher auf eine Beaufschlagung mit Überdruck verzichtet, und trotzdem ein Faserverbund-Bauteil niedriger Porosität gefertigt werden. Dies ermöglicht die Herstellung großflächiger komplexer Faserverbundstoff-Bauteile in einem Prozessschritt.

Beispielsweise kann die für die Verarbeitung des Bauteils notwendig Temperatur mittels Mikrowellen eingebracht werden. Vorteilhaft dabei ist, dass nur das Bauteil selbst erhitzt wird und keine Erwärmung der Umgebung zur Folge hat.

Alternativ kann eine hohe Aufheizrate durch die Verwendung eines entsprechend temperierten Fluids, zur Temperaturübertragung erreicht werden. Dabei wird das Bauteil, welches durch eine flexible Membran von einem Fluid getrennt ist, von diesem umspült. Das Fluid kann neben der Temperatur auch Druck übertragen.

Weitere Vorteile, Merkmale und Anwendungsmöglichkeiten der vorliegenden Erfindung ergeben sich aus der nachfolgenden Beschreibung in Verbindung mit dem, in der Zeichnung dargestellten Ausführungsbeispiel.

In der Beschreibung, in den Patentansprüchen, in der Zusammenfassung und den Zeichnungen werden die in der unten aufgeführten Liste der Bezugszeichen verwendeten Begriffe und zugeordneten Bezugszeichen verwendet. In der Zeichnung bedeuten:

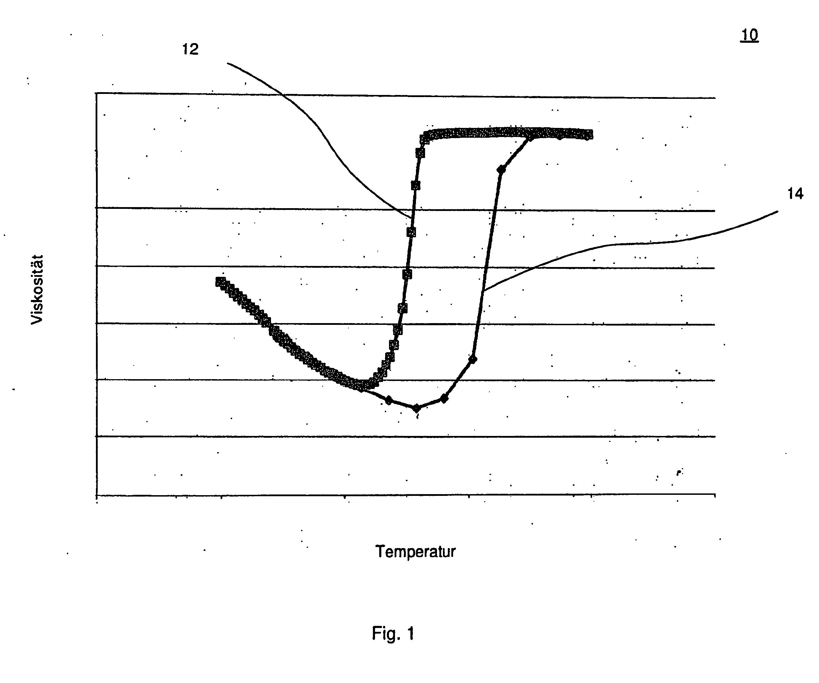

- Fig. 1: Viskositätsverlauf bei unterschiedlichen Aufheizraten.

Fig. 1 zeigt exemplarisch den Verlauf der Viskosität 10 eines Matrixmaterials bezüglich der Temperatur. Es ist gezeigt, dass die Viskosität nicht nur abhängig von der Temperatur sondern auch von der Aufheizrate ist. So liegt das Viskositätsminimum des Viskositätsverlaufs bei einer Aufheizrate von 1.5 K/min 12 deutlich höher als das Minimum des Viskositätsverlaufs bei einer Aufheizrate von 10 K/min 14.

Mit der niedrigeren Viskosität verbessert sich auch das Eindringverhalten des Matrixmaterials in eine trockene Faserstruktur. Somit wird durch ein Verfahren mit einer Aufheizrate von 10 K/min die Porosität eines Faserverbundmaterials gegenüber einem mit 1.5 K/min deutlich reduziert. Damit erhöht sich die Qualität des erzeugten Bauteils signifikant.

Dies ist besonders im Luftfahrtbereich von besonderem Interesse, da so besonders sicherheitsrelevanten Gesichtspunkten Rechnung getragen werden kann. Darüber hinaus kann eine Verbesserung der Qualität eine Reduktion von Materialstärken und damit eine Verringerung des Gewichts zur Folge haben.

### Bezugszeichenliste:

- 10: Viskositätsverlauf über Temperatur
- 12: Viskositätsverlauf bei einer Aufheizrate von 1.5 K/min
- 14: Viskositätsverlauf bei einer Aufheizrate von 10 K/min

## Patentansprüche

1. Vakuumunterstütztes Prepreg-Infusions-Hybrid- Verfahren mit Schnellaushärtung umfassend folgende Schritte:
- Aneinanderdrücken mindestens eines ersten Bauteilbereichs aus vorimprägniertem Prepreg-Material an mindestens einen zweiten Bauteilbereich aus trockener Faserstruktur zu einem gesamten Bauteil, wobei das Prepreg-Material des ersten Bauteilbereichs ein erstes Matrixmaterial umfasst,
- Vakuumieren des gesamten Bauteils,
- Aufheizen des gesamten Bauteils mit einer Aufheizrate von mindestens 5 K/min bis zur Infusionstemperatur eines zweiten Matrixmaterials,
- Infiltrieren des infusionstauglichen zweiten Matrixmaterials in den zweiten Bauteilbereich,
- Aufheizen des gesamten Bauteils auf Aushärtetemperatur mit einer Aufheizrate von mindestens 5 K/min, und
- Halten der Aushärtetemperatur für eine frei einstellbare Aushärtedauer.

2. Verfahren nach Anspruch 1, **dadurch gekennzeichnet, dass** zur Durchführung des Verfahrens zwischen der Umgebung und dem gesamten Bauteil ein Differenzdruck kleiner oder gleich dem atmosphärische Druck herrscht.

3. Verfahren nach einem der vorangegangenen Ansprüche, **dadurch gekennzeichnet, dass** die Temperatur durch Mikrowellen eingebracht wird.

4. Verfahren nach Anspruch 1 oder 2, **dadurch gekennzeichnet, dass** die Temperatur durch ein entsprechend temperiertes Fluid auf das gesamte Bauteil übertragen wird.

## Claims

1. A vacuum-supported prepreg infusion hybrid method with rapid curing, comprising the following steps:
- pressing-together of at least one first component region of pre-impregnated prepreg material onto at least one second component region of dry fibre structure to form an overall component, the prepreg material of the first component region comprising a first matrix material,
- vacuuming of the overall component,
- heating of the overall component at a heating rate of at least 5 K/min up to the infusion temperature of a second matrix material,
- infiltration of the second matrix material which is suitable for infusion into the second component region,
- heating of the overall component to curing temperature at a heating rate of at least 5 K/min, and
- holding the curing temperature for a freely settable curing duration.

2. A method according to Claim 1, **characterised in that** for carrying out the method a differential pressure less than or equal to the atmospheric pressure prevails between the surroundings and the overall component.

3. A method according to one of the preceding claims, **characterised in that** the temperature is introduced by microwaves.

4. A method according to Claim 1 or 2, **characterised in that** the temperature is transmitted to the overall component by a correspondingly temperature-controlled fluid.

## Revendications

1. Procédé hybride de perfusion de pré-imprégné assisté sous vide, à durcissement rapide, comprenant les étapes suivantes consistant à :
- presser au moins un premier domaine d'élément structurel constitué d'un matériau pré-imprégné contre au moins un second domaine d'élément structurel constitué d'une structure fibreuse sèche pour former un élément structurel entier, le matériau pré-imprégné du premier domaine d'élément structurel comprenant une première matière de matrice,
- mettre sous vide l'élément structurel entier,
- échauffer l'élément structurel entier à une vitesse d'échauffement d'au moins 5 K/min. jusqu'à la température de perfusion d'une seconde matière de matrice,
- infiltrer la seconde matière de matrice apte à être perfusée dans le second domaine d'élément structurel,
- échauffer l'élément structurel entier à la température de durcissement à une vitesse d'échauffement d'au moins 5 K/min, et
- maintenir la température de durcissement pendant une durée de durcissement réglable librement.

2. Procédé selon la revendication 1, **caractérisé en ce que**, lors de l'exécution du procédé, une différence de pression inférieure ou égale à la pression atmosphérique règne entre les alentours et l'élément structurel entier.

3. Procédé selon l'une quelconque des revendications précédentes, **caractérisé en ce que** la température visée est produite par des micro-ondes.

4. Procédé selon la revendication 1 ou 2, **caractérisé en ce que** la température est transmise à l'élément structurel entier par un fluide tempéré de façon correspondante.
